# EUROPÄISCHE PATENTSCHRIFT

(11) **EP 2 185 839 B1**
(45) Veröffentlichungstag und Bekanntmachung des Hinweises auf die Patenterteilung: **16.11.2011**
(21) Anmeldenummer: 08787350.1
(22) Anmeldetag: 20.08.2008
(51) Int. Cl.: F16G 13/20, A47C 7/40

(54) **GLIEDERKETTE**
LINK CHAIN
CHAINE A MAILLONS

(30) Priorität: 22.08.2007 DE 102007039680
(43) Veröffentlichungstag der Anmeldung: 19.05.2010
(73) Patentinhaber: Kintec Solution GmbH, 33397 Rietberg (DE)
(72) Erfinder: MACKERT, Michael, 59602 Rüthen (DE)
(74) Vertreter: Moser & Götze
(86) Internationale Anmeldenummer: PCT/EP2008/060902
(87) Internationale Veröffentlichungsnummer: WO 2009/024588

(56) Entgegenhaltungen:
- EP-A- 0 027 660
- DE-A1- 2 059 143
- DE-U1-202005 011 386

## Beschreibung

Die Erfindung betrifft eine Gliederkette mit zwei oder mehr Reihen von Kettenelementen, wobei die Kettenelemente einer Reihe mit denjenigen der benachbarten Reihe in der Kettenebene derart drehbar verbunden sind, dass jedes Kettenelement zwei Drehachsen hat, von denen jede eine der zwei Drehachsen von zwei verschiedenen Kettenelementen in benachbarten Reihen ist, und dass die Kettenelemente einer Reihe derart durch Verzahnungen ihrer Enden untereinander verbunden sind, dass die Kette in der Kettenebene flexibel ist.

Eine kontinuierlich veränderbare Fläche mit ähnlichem Aufbau ist aus der DE 20 59 143 A bekannt. Die dort beschriebene Fläche ist in mehrere Reihen von Flächenelementen geteilt, wobei die Flächenelemente einer Reihe mit denjenigen einer benachbarten Reihe in der Flächenebene drehbar derart verbunden, dass jedes Flächenelement zwei Drehpunkte hat, von denen jeder einer der zwei Drehpunkte von zwei verschiedenen Flächenelementen in benachbarten Reihen ist. Dabei sind die Flächenelemente in der gleichen Reihe derart durch Bewegungsübertragungsteile untereinander verbunden, dass die Fläche in ihrer Ebene flexibel ist. Mit dieser Fläche ist es möglich, kontinuierlich veränderbare gekrümmte Flächen durch Regelglieder zu bewirken, die lediglich an einem Ende der jeweiligen Fläche angeordnet sind.

Aufgabe der Erfindung ist es, eine Gliederkette bereitzustellen, bei der die Kette nicht nur eine kontinuierliche Veränderung ihrer Krümmung analog zu der kontinuierlich veränderbaren Fläche der DE 20 59 143 A erlaubt, sondern die bequeme eine Einstellung der Krümmung und somit den Einsatz in Möbeln erlaubt.

Diese Aufgabe wird durch die in Anspruch 1 angegebene Gliederkette gelöst.

Dadurch, dass die Kettenelemente an einem Ende der Gliederkette an ihrer Außenseite ebenfalls mit einer Verzahnung versehen sind, die im Eingriff mit einem Stellglied sind, ist es auf einfache Weise möglich, die Gliederkette nicht nur in der Krümmung durch einseitige Einwirkung mittels des Stellglieds her zu verändern, sondern die geänderte Einstellung auch nach beendeter Einstellung beizubehalten.

Hierzu ist es sinnvoll, wenn das Stellglied eine Selbsthemmung oder Rastfunktion aufweist, so dass eine geänderte Einstellung auch nach beendeter Einstellung beibehalten wird.

Das Stellglied sollte derart mit den Kettenelementen im Eingriff sein, dass diese relativ zu einander verdreht werden, durch die Verstellung des Stellglieds. Das Stellglied kann einen pneumatischen, hydraulischen, elektromotorischen oder manuellen Antrieb besitzen.

Dies erlaubt vielfältige Einsatzmöglichkeiten, insbesondere bei der Konstruktion von so genannten Sitz-Liege-Sesseln. Solche Sessel weisen eine gegenüber einer Sitzfläche verschwenkbare Rückenlehne und eine ausschwenkbaren Beinauflage auf, wobei der Sessel zwischen einer Sitz- und einer Liegeposition verschwenkbar ist. Sie erlauben eine Verstellung der Position zwischen einer "normalen" aufrechten Sitzposition und einer etwa horizontal ausgerichteten Liegeposition. Die Rückenlehne und/oder Kopfstützen sind dabei ggf. ebenfalls verstellbar und teilweise mit der Verstellbewegung des Sessels gekoppelt oder unabhängig davon manuell einstellbar. So eignet sich eine solche Kette zur Übertragung der Verstellbewegung und der Beibehaltung einer eingestellten Position des Sessels. Somit sind auf einfache und elegante Weise Sessel herstellbar, die eine Vielzahl von einstellbaren Positionen erlauben.

Denkbar ist auch eine Verwendung der Kette in Sofas oder dergleichen zur Kopfstützen- oder Armlehnenverstellung.

In einer besonders bevorzugten Ausführungsform ist das Stellglied ein Rastbeschlag.

Vorzugsweise wird ein solcher Rastbeschlag verwendet, bei dem das Baumaß möglichst klein ist. Daneben sollte der Rastbeschlag auch eine große Haltekraft und gleichzeitig einen möglichst großen rastenden Verstellbereich aufweisen. Insbesondere soll der Rastbeschlag zudem so klein bauend sein, dass sein Einsatz in Sitz- und Liegemöbel ohne Probleme möglich ist.

Daher wird bevorzugt ein Rastbeschlag eingesetzt, der mit einer Anschlusslasche, die auf ihrer Außenseite eine Verzahnung aufweist, die im Eingriff mit der Verzahnung des vorletzten Kettenelements ist, und mit einer damit schwenkbar verbundenen, in verschiedenen Winkelstellungen arretierbaren Rastlasche versehen ist, die im Eingriff mit der Verzahnung des vorletzten Kettenelements ist und eine konzentrisch zur Gelenkachse angeordnete Verzahnung aufweist. In die Rastlasche greift vorzugsweise in Raststellung eine drehbar an der Anschlusslasche gelagerte Sperrklinke ein, wobei die Sperrklinke in der ausgerückten Position durch eine Feder gehalten und in der eingerückten Position von derselben Feder beaufschlagt wird, **dadurch gekennzeichnet, dass** lediglich ein Anschlagnocken an der Rastlasche zum Ausrücken der Sperrklinke durch Zusammenwirken mit einer Ausrücknase vorgesehen ist und dass die Sperrklinke eine Einrückfläche aufweist, die mit der Verzahnung zum Einrücken zusammenwirkt.

Somit ist es zusätzlich möglich, auf den üblichen Drucknocken zum Einrücken zu verzichten. Dessen Funktion wird also von der Verzahnung selbst übernommen. Somit wird die Anzahl der Zähne nicht verringert. Ganz im Gegenteil ist es möglich, den verzahnten Bereich besonders groß auszubilden. Ferner kann der Abstand der Sperrklinke von der Rastlasche verringert werden, da keine über die Verzahnung hervorstehende Drucknase vorhanden bzw. notwendig ist.

Die Verzahnung kommt bei der Bewegung in der ausgerückten Stellung der Sperrklinke in Kontakt mit der Einrückfläche an der Sperrklinke und drückt diese in die eingerückte Stellung. In der eingerückten Stellung greift die Verzahnung lediglich in die Rastzähne der Sperrklinke ein. So kann die Einrückfläche exzentrisch zur Drehachse der Sperrklinke ausgebildet sein. Die Einrückfläche kann ferner einerseits von mindestens einem Rastzahn und andererseits von einer Ausrücknase begrenzt werden.

Der "aktive" Bereich der eigentlichen Einrückfläche kann dabei an der der Verzahnung zugewandten Seite der Ausrücknase ausgebildet sein. Die Feder des Rastbeschlags besitzt eine Doppelfunktion. Einerseits hält sie die Sperrklinke in eingerückter Position im Rasteingriff mit der Verzahnung. Andererseits hält sie die Sperrklinke in der ausgerückten Position fest.

Nach einer weiteren Ausführungsform des Rastbeschlags weist die Sperrklinke hierzu an der der Verzahnung abgewandten Seite eine Rastausnehmung auf, in die die Feder bei ausgerückter Stellung der Sperrklinke eingreift und diese festhält. Zusätzlich kann die Sperrklinke an der der Verzahnung abgewandten Seite eine Anlagefläche aufweisen, an die die Feder bei eingerückter Stellung der Sperrklinke anliegt.

Die Rastausnehmung und die Anlagefläche können benachbart angeordnet werden, so dass kleine Bewegungen der Klinke bereits zwischen der eingerückten und ausgerückten Position unterscheiden. Dies erlaubt wiederum eine Verkleinerung der Gesamtbaugröße. Dabei können die Rastausnehmung und die Anlagefläche von einer scharfen Kante getrennt sein, so dass sich ein "schnappendes" Umschalten ergibt.

Nach einer bevorzugten Ausführungsform weist die Rastausnehmung eine Fläche auf, die der Gestalt und Lage des vorderen Bereichs der Feder angepasst ist, so dass diese im ausgerückten Zustand der Sperrklinke etwa flächig an bzw. auf der Fläche liegt. Somit wird trotz einfacher Bauweise der Sperrklinke und der Feder ein gutes Festhalten der Sperrklinke durch die Feder erreicht.

Eine besonders einfache Befestigung ergibt sich, wenn die Feder klemmend an einer Abdeckung, z. B. für den Gelenkbereich des Rastbeschlags, gehalten ist.

Die Sperrklinke kann sichelförmig ausgebildet. sein Dabei ist es von Vorteil, wenn die Drehachse der Sperrklinke asymmetrisch angeordnet ist, so dass eine günstige Hebelgeometrie erreicht wird.

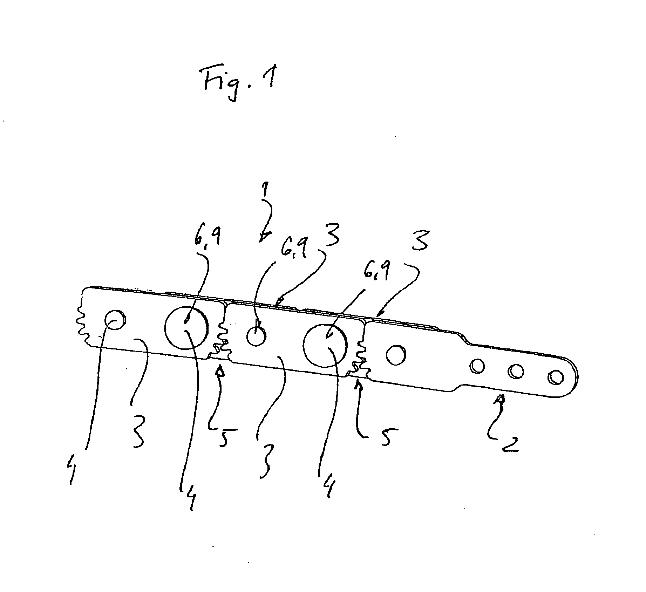

Einen besonders kompakte und gleichzeitig einfache Ausführung des Stellgliedbereichs mit hoher Haltekraft erhält man, wenn die Drehachse der Rastlasche, die Drehachse der Sperrklinke und die Längsmittellinien der beiden Laschen sowie die Drehachsen der Kettenelemente in der Ausgangsstellung der Gliederkette (lineare Anordnung ohne Krümmung, vgl. Figur 1) auf einer Linie liegen.

Besonders günstig ist es, wenn die Drehachsen der Kettenelemente eine Kunststoffscheibe und eine Kunststoffbuchse aufweisen.

Insbesondere ist vorgesehen, dass die Kunststoffscheibe zwischen den jeweiligen Kettenelementen unterschiedlicher Reihen angeordnet ist. Dabei wird sie Sinnvollerweise von der Drehachse durchgriffen.

Ferner ist es sinnvoll, wenn die Kunststoffbuchse zwischen Niete und Kettenelement angeordnet ist. Dabei wird sie Sinnvollerweise von der Drehachse durchgriffen und an das Kettenelement gepresst. Es ist vorgesehen, dass eine Vernietung der Drehachsen von abwechselnden Seiten der Reihe aus erfolgt.

Eine weitere besonders bevortugte Ausführungsform der Erfindung erhält man, wenn das Stellglied eine elektromotorisch angetriebene Schnecke umfasst, die eine Verstellung des vorletzten Kettenelements relativ zu dem fixierten letzten Kettenelement bewirkt. Der Einsatz von Schnecken ist besonders günstig, da diese hohe Kräfte aufnehmen und übertragen können sowie über eine Selbsthemmung verfügen.

Weitere Einzelheiten und Vorteile ergeben sich aus der nachfolgenden Beschreibung eines Ausführungsbeispieles anhand der Zeichnung, in der
- Fig. 1: eine Gliederkette in etwa linearer Stellung perspektivisch von der Seite her ohne Stellglied zeigt;

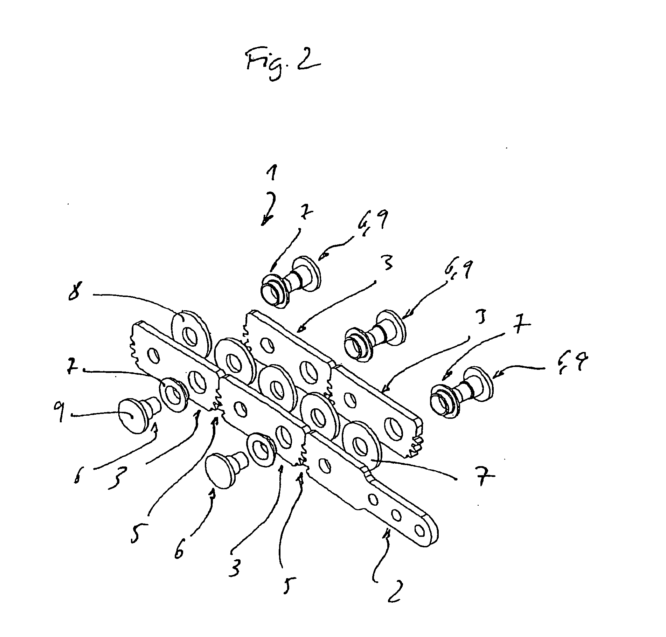

- Fig. 2: die Gliederkette aus Fig. 1 in einer entsprechenden perspektivischen Explosionsansicht zeigt;

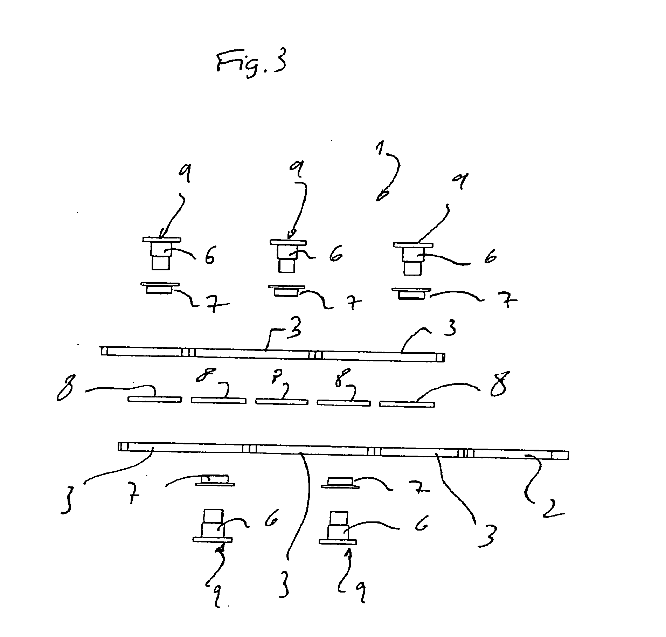

- Fig. 3: die Gliederkette aus Fig. 1 in einer entsprechenden Explosionsansicht von oben zeigt;

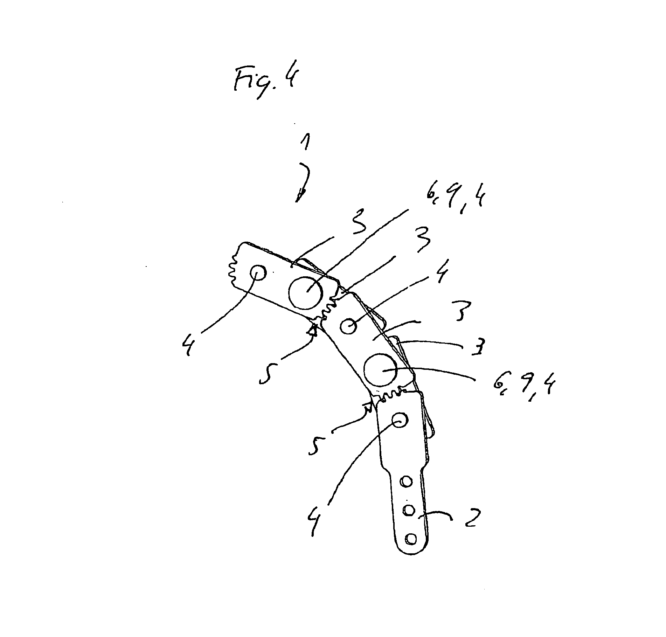

- Fig. 4: die Gliederkette aus Fig. 1 in gekrümmter Stellung perspektivisch von der Seite her zeigt.
- Fig. 5: eine Draufsicht auf einen Rastbeschlag in der eingerückten Endstellung zeigt, wobei die Abdeckung aufgeschnitten ist;
- Fig. 6: den Rastbeschlag aus Fig. 5 in der ausgerückten Endstellung zeigt;
- Fig. 7: den Rastbeschlag aus Fig. 5 in der Stellung beim Einrücken der Sperrklinke;
- Fig. 8: die komplette Gliederkette einschl. Rastbeschlag perspektivisch von der Seite in der linearen Ausgangsstellung zeigt und
- Fig. 9: die komplette Gliederkette aus Fig. 8 in einer gekrümmten Stellung perspektivisch von der Rückseite zeigt.

In den Figuren ist eine als Ganzes mit 1 bezeichnete Gliederkette dargestellt. Diese umfasst neben der eigentlichen Gliederkette 1 einen Rastbeschlag 11 für die Einleitung einer Bewegung.

Zunächst wird die Gliederkette 1 ohne Rastbeschlag 11 erläutert.

Die Gliederkette 1 umfasst zwei Reihen von Kettenelementen. Jede Reihe umfasst prinzipiell ein Endkettenelement 2 und mehrere Kettenelemente 3. Die Endkettenelemente 2 der Reihen sind an jeweils abgewandten Enden der Gliederkette 1 angeordnet.

An einem Ende wurde auf das Endkettenelement verzichtet. Hier kommt der unten beschriebene Rastbeschlag 11 als Stellglied zum Ansatz.

Das Kettenelement 2 bzw. die Kettenelemente3 einer Reihe sind mit denjenigen der benachbarten Reihe in der Kettenebene über Drehachsen 4 drehbar verbunden. Jedes Kettenelement 3 hat zwei Drehachsen 4, von denen jede eine der zwei Drehachsen 4 von zwei verschiedenen Kettenelementen 3 in benachbarten Reihen ist.

Das Endkettenelement 2 weist nur eine Drehachse 4 in der eigentlichen Gliederkette auf.

Die Kettenelemente 2,3 einer Reihe sind durch Verzahnungen 5 ihrer Enden untereinander verbunden, so dass die Kette in der Kettenebene flexibel ist und eine am Ende eingeleitete Bewegung auf die benachbarten Kettenelemente 3 weitergegeben wird, so dass die Kette in der Krümmung verstellbar ist.

Im vorliegenden Beispiel sind die Drehachsen 4 durch eine Vernietung mittels Nieten 6 hergestellt.

Die Nieten 6 umfassen einen verbreiterten tellerförmigen Kopf 9, der eine Kunststoffbuchse 7 gegen die Oberfläche des jeweiligen Kettenelements einer Reihe drückt. Gleichzeitig greift die Kunststoffbuchse 7 in die entsprechende Bohrung im jeweiligen Kettenelement ein und wird von der Niete 6 durchgriffen.

Die Niete 6 durchgreift ebenfalls das jeweilige andere Kettenelement der benachbarten Reihe, wobei die Niete 6 eine Kunststoffscheibe 8 durchgreift, die zwischen den jeweiligen Kettenelementen 3 der Reihen angeordnet ist.

Die Kunststoffbuchse 7 und die Kunststoffscheibe 8 sind jeweils aus elastischem Material hergestellt.

In der vorliegenden beispielhaften Ausführungsform ist das Stellglied ein Rastbeschlag.

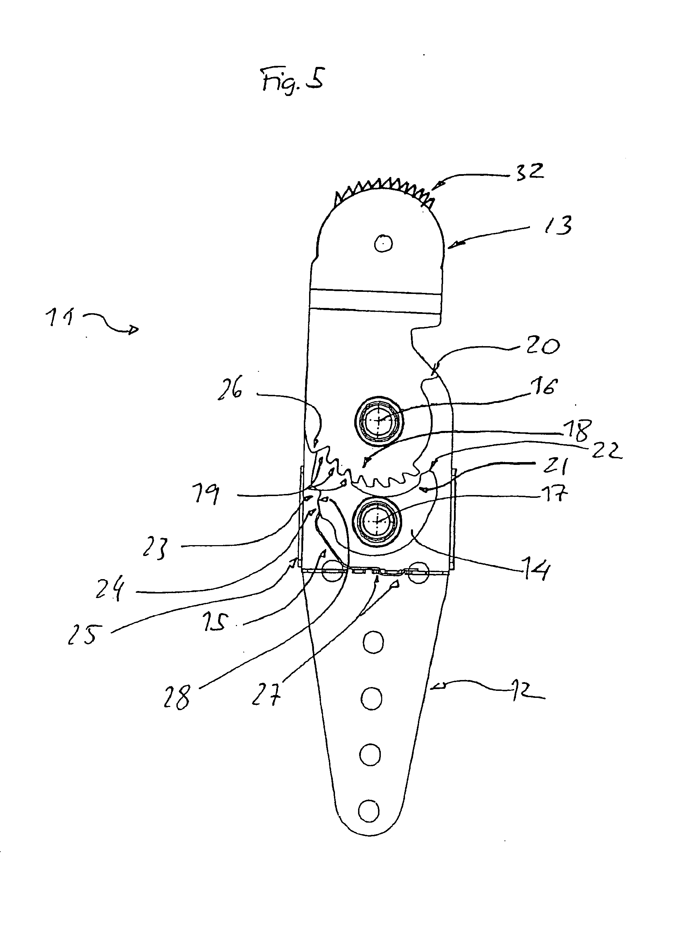

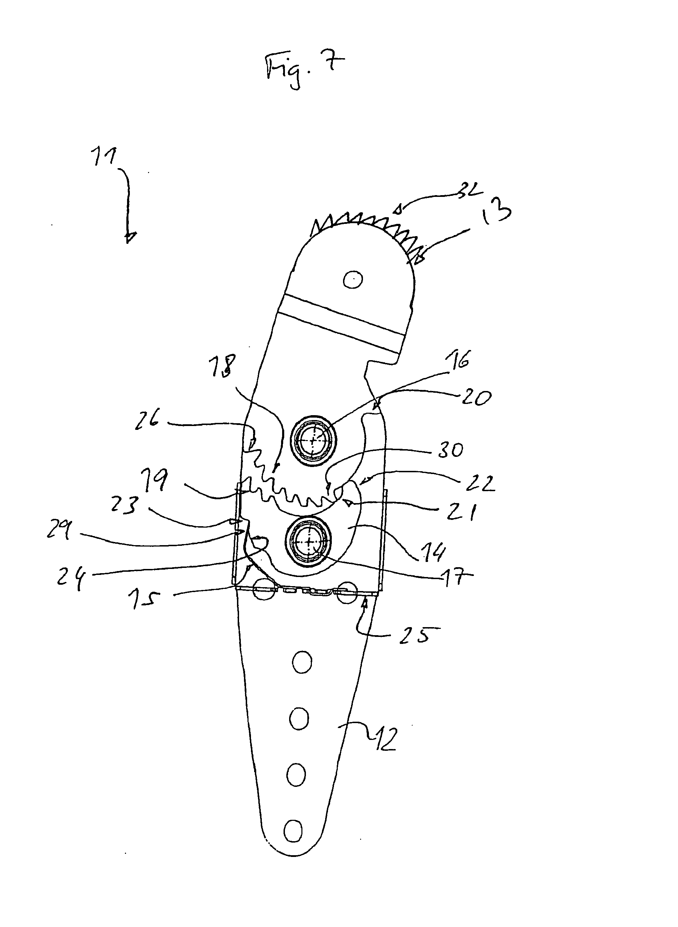

In den Figuren 5 bis 7 ist der als Ganzes mit 11 bezeichnete Rastbeschlag, der in der Ausführungsform der Erfindung verwendet wird, in der Draufsicht in verschiedenen Stellungen dargestellt, wobei die Abdeckung aufgeschnitten ist und lediglich deren Seitenwände 25 angedeutet sind.

Der Aufbau und die Funktion des Rastbeschlags 11 werden zunächst ohne die Wechselwirkung mit der Gliederkette 1 beschrieben, um ein besseres Verständnis für die Funktionsweise zu bekommen.

Der Rastbeschlag umfasst eine Anschlusslasche 12 zur Befestigung am feststehenden Teil eines Möbels und eine Rastlasche 13 zur Befestigung der eigentliche Gliederkette 1.

Die Anschlusslasche 12 weist zwei in den Figuren 5 bis 7 nicht sichtbare Bohrungen auf, um zwei Nieten 16, 17 oder dergleichen aufzunehmen, um einerseits die Abdeckung zu befestigen und andererseits die jeweiligen Drehachsen 16, 17 der Rastlasche 13 und der Sperrklinke 14 auszubilden. Diese Nieten 16, 17 können mit geeigneten Hülsen usw. versehen werden, um die Drehachsen auszubilden.

Die Rastlasche 13 weist an ihrem einen Ende eine konzentrisch zu ihrer Drehachse 16 bzw. der Gelenkachse des Rastbeschlags 11 angeordnete Verzahnung 18 auf. Auf der einen Seite der Verzahnung 18 ist ein Anschlag 26 zur Begrenzung der Bewegung der Laschen gegeneinander vorgesehen. Liegt der äußere Zahn der Sperrklinke 14 an dem Anschlag 26 an (vgl. Fig. 5), so befindet sich der Rastbeschlag in der Ausgangsstellung. Auf der anderen Seite ist durch einen unverzahnten Bereich getrennt bzw. beabstandet ein Anschlagnocken 20 vorgesehen.

Die Sperrklinke 14 ist der Verzahnung 18 gegenüber angeordnet und weist eine etwa sichelförmige Gestalt auf, die exzentrisch an der Niete 17 als Drehachse gelagert ist. Auf der einen Seite und der Verzahnung 18 gegenüberliegend sind mehrere Rastzähne 19 angeordnet, die derart ausgestaltet sind, dass sie zusammen mit der Verzahnung 18 eine Selbsthemmung bewirken und die Rastfunktion ausüben. Auf der anderen Seite der Sperrklinke 14 ist durch einen unverzahnten Bereich getrennt bzw. beabstandet ein Ausrücknase 22 vorgesehen.

In der eingerückten Stellung der Sperrklinke 14 (vgl. Fig. 5) greifen jeweils drei Rastzähne 19 der Sperrklinke 14 in die gegenüberliegende Verzahnung 18 der Rastlasche 13 ein. Um dieses Ineinandergreifen aufrecht zu erhalten ist eine Feder 15 vorgesehen, die die Sperrklinke 14 in der eingerückten Position hält bzw. beaufschlagt. Dazu drückt die Feder 15 mit ihrer Spitze auf eine Anlagefläche 24 auf der Rückseite der Sperrklinke 14. Die Feder 15 ist eine Blattfeder und in entsprechenden Schlitzen 27 der Seitenwände 25 der Abdeckung klemmend festgelegt.

Die Drehachse 16 der Rastlasche 13, die Drehachse 17 der Sperrklinke 14 und die Längsmittellinien der beiden Laschen 12,13 sowie der Drehachsen 4 der Kettenelemente 3 liegen in der in Figur 5 dargestellten linearen Ausgangsposition auf einer Linie.

Zur Verstellung der Gliederkette 1 bzw. des Rastbeschlags 11 wird die Rastlasche 13 im Uhrzeigersinn gegenüber der Anschlusslasche 12 verdreht.

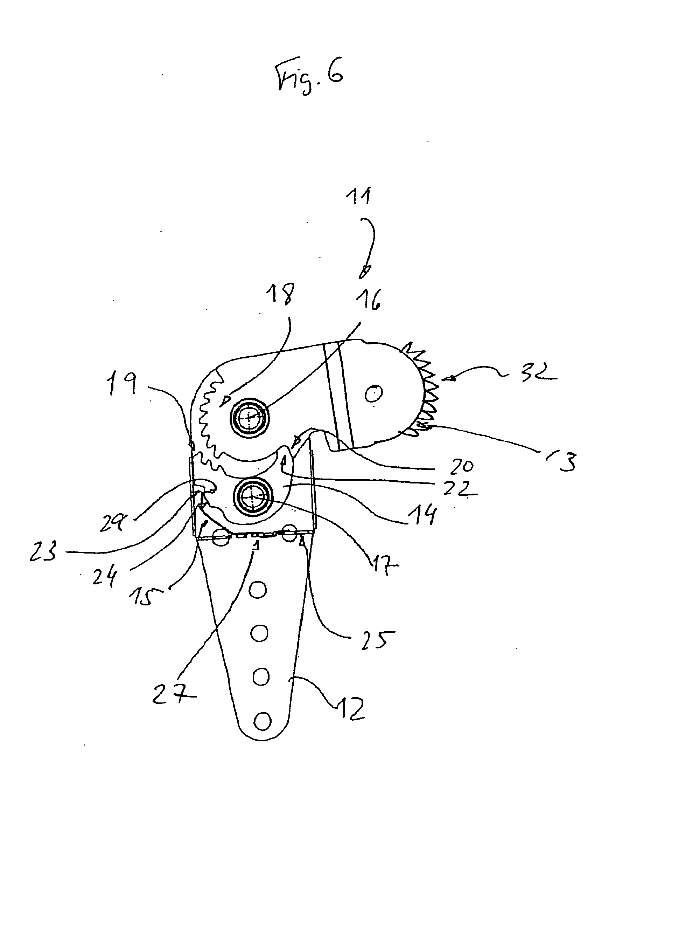

Wird die Rastlasche 13 soweit im Uhrzeigersinn gegenüber der Anschlusslasche 12 verdreht bis der Anschlagnocken 20 zur Anlage an der Ausrücknase 22 kommt und weiter bis er gegen diese drückt, dann wird die Sperrklinke 14 gegen die Federkraft der Feder 15 ausgerückt. Diese Stellung ist in Fig. 6 dargestellt.

Beim Ausrücken verändert sich die Position, an der die Feder 15 mit der Rückseite der Sperrklinke 14 kontaktiert. Um die die Sperrklinke 14 in der ausgerückten Position zu halten, rutscht die Feder 15 mit ihrer Spitze in eine Rastausnehmung 23 neben der Anlagefläche 24 auf der Rückseite der Sperrklinke. Der Übergang zwischen der Rastausnehmung 23 und der Anlagefläche 24 wird von einer scharfen Kante 28 gebildet, so dass mit dem Vorgang ein gewisses "Schnappen" einhergeht. Diese Kante 28 geht in eine etwa ebene Fläche 29 der Rastausnehmung 23 über, die der Gestalt und Lage des vorderen Bereichs der Feder 15 angepasst ist, so dass diese nicht allein mit ihrer Spitze an der Sperrklinke 14 anliegt, wie dies in eingerückten Zustand der Fall ist, sondern mit dem vorderen Bereich etwa flächig an bzw. auf der Fläche 29 liegt. Somit wird, ohne dass die Spitze der Feder 15 besonders bearbeitet oder aufwendig gebogen werden müsste, ein gutes Festhalten der Sperrklinke durch die Feder und die Doppelfunktion der Feder erreicht.

Um die Sperrklinke 14 wieder einzurücken, erfolgt eine Verdrehung der Rastlasche 13 bzw. der Gliederkette 1 zurück gegen den Uhrzeigersinn gegenüber der Anschlusslasche 12. Hierbei kommt die Verzahnung 18 bzw. deren ersten Zahn 20 mit der Einrückfläche 21 in Berührung. Die Einrückfläche 21 ist also einerseits von einem Rastzahn 19 und andererseits von der Ausrücknase 22 bzw. deren Rückseite begrenzt.

Der eigentlich "aktive" Bereich der Einrückfläche 21, der für das endgültige Einrücken verantwortlich ist, ist am Fuße der Rückseite der Ausrücknase 22 bzw. an der der Verzahnung 18 zugewandten Seite der Ausrücknase 22 ausgebildet. Diese Fläche erstreckt sich in Richtung der Verzahnung 18 gerade so weit, dass die Verzahnung 8 im Rastbetrieb an der Einrückfläche 21 bzw. Rückseite der Ausrücknase 22 ohne Kontakt vorbei bewegt wird, jedoch der erste Zahn 30 der Verzahnung 18 in der veränderten Stellung im ausgerückten Zustand der Sperrklinke 14 an ihr zur Anlage kommt. Die Einrückfläche 11 ist dabei exzentrisch zur Drehachse 17 der Sperrklinke 14 ausgebildet, so dass der Zahn 30 wie alle anderen Zähne ausgeformt ist und im Rastbetrieb genutzt werden kann.

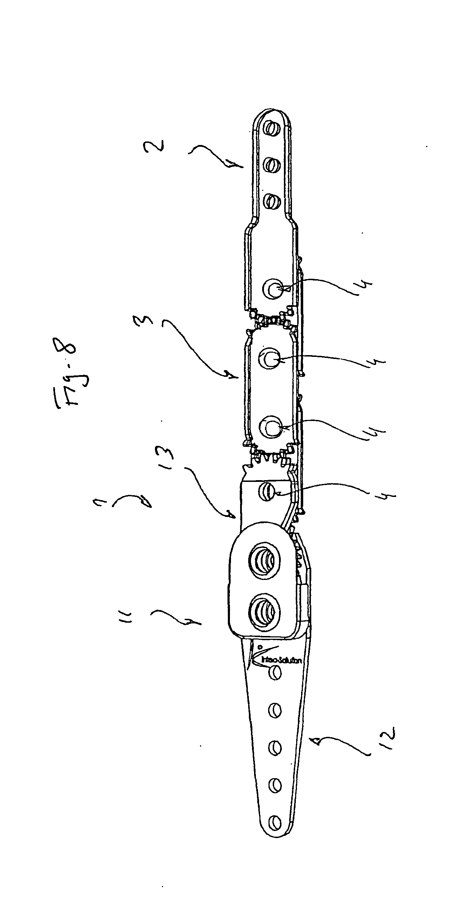

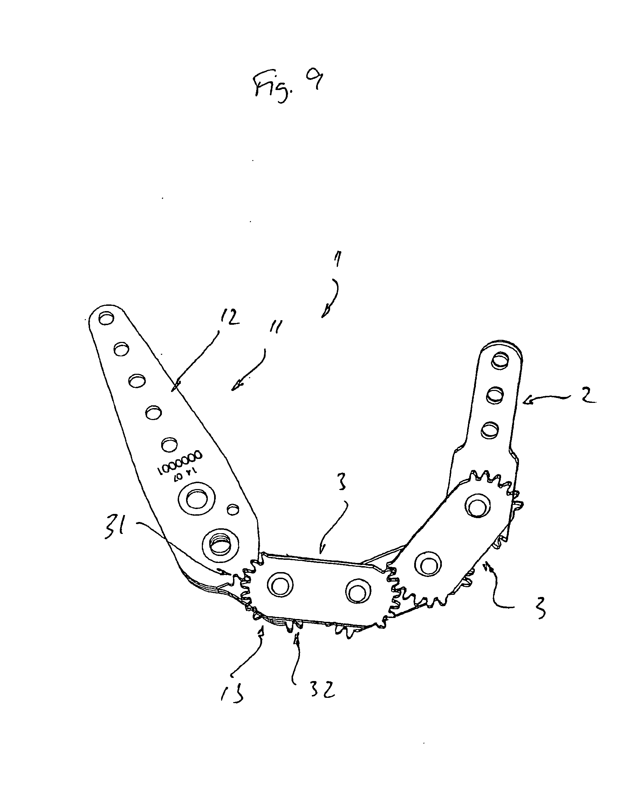

Die komplette Gliederkette 1 inkl. Rastbeschlag 11 ist in den Figuren 8 und 9 gezeigt.

Bei der Wechselwirkung mir der Gliederkette 1 bildet der Rastbeschlag 11 ein Ende der Gliederkette 1 aus. Die Rastlasche 13 bildet also das letzte Kettenelement 3' auf der entsprechenden Seite aus und die Anschlusslasche 12 das entsprechende Endkettenelement 2' aus.

Mit anderen Worten, die Rastlasche 13 wechselwirkt mit dem vorletzten Kettenelement 3 und die Anschlusslasche 12 mit dem letzten Kettenelement 3 der eigentlichen Gliederkette 1.

Zur Wechselwirkung mit der eigentlichen Gliederkette 1 bzw. um die Relativbewegung zu übertragen, weist die Anschlusslasche 12 daher auf ihrer Außenseite eine Verzahnung 31 auf (vgl. Figur 5), die im Eingriff mir der Verzahnung des letzten Kettenelements 3 ist, also gemeinsam eine Verzahnung 5 ausbilden.

Zur Wechselwirkung mit der eigentlichen Gliederkette 1 bzw. um die Relativbewegung zu übertragen, weist die Rastlasche 13 daher auf ihrer Außenseite eine Verzahnung 32 auf (vgl. Figur 8), die im Eingriff mir der Verzahnung des vorletzten Kettenelements 3 ist, also gemeinsam eine Verzahnung 5 ausbilden.

Somit kann die Gliederkette 1 durch Einleiten einer Relativbewegung zwischen einem festgelegten Endkettenelement 2 bzw. Anschlusslasche 12 und Kettenelement 3 bzw. Rastlasche 13 des Rastbeschlags 11 in ihrer Krümmung durch Aufbringen einer Kraft verändert werden. Die eingestellte Krümmung behält die Kette dann bei, bis der Rastbeschlag 11 weitergerastet oder entrastet wird.

So kann die Kette z. B. in den oben angegebenen Sitz-Liege-Sesseln eingesetzt werden. Durch die gesamte Gewichtskraft der Benutzer kann dann z. B. die Beinauflage beim Verschwenken des Sessel von einer Position in eine andere verstellt werden, verharrt jedoch trotz der darauf aufliegenden geringeren Gewichtskraft der Beine in der eingestellten Position.

### Bezugszeichenliste

- 1: Kette
- 2: Endkettenelement
- 3: Kettenelement
- 4: Drehachse
- 5: Verzahnung
- 6: Niete
- 7: Kunststoffbuchse
- 8: Kunststoffscheibe
- 9: Kopf der Niete
- 11: Rastbeschlag
- 12: Anschlusslasche
- 13: Rastlasche
- 14: Sperrklinke
- 15: Feder
- 16: Achse bzw. Niete
- 17: Achse bzw. Niete
- 18: Verzahnung
- 19: Rastzahn
- 20: Anschlagnocken
- 21: Einrückfläche
- 22: Ausrücknase
- 23: Rastausnehmung
- 24: Anlagefläche
- 25: Seitenwände der Abdeckung
- 26: Anschlag
- 27: Schlitze
- 28: Kante
- 29: Fläche
- 30: Zahn
- 31: Verzahnung
- 32: Verzahnung

## Patentansprüche

1. Gliederkette (1) mit zwei oder mehr Reihen von Kettenelementen (2, 3), wobei die Kettenelemente (2, 3) einer Reihe mit denjenigen der benachbarten Reihe in der Kettenebene derart drehbar verbunden sind, dass jedes Kettenelement (3) zwei Drehachsen (4) hat, von denen jede eine der zwei Drehachsen (4) von zwei verschiedenen Kettenelementen (3) in benachbarten Reihen ist, und dass die Kettenelemente (3) einer Reihe derart durch Verzahnungen (5) ihrer Enden untereinander verbunden sind, dass die Kette (1) in der Kettenebene flexibel ist, **dadurch gekennzeichnet, dass** die Kettenelemente (3) an einem Ende der Gliederkette an ihrer Außenseite ebenfalls mit einer Verzahnung versehen sind, die im Eingriff mit einem Stellglied (11) sind, wobei das Stellglied einen pneumatischen, hydraulischen, elektromotorischen oder manuellen Antrieb besitzt und das Stellglied ein Rastbeschlag (11) ist, wobei der Rastbeschlag (11) mit einer Anschlusslasche (12), die auf ihrer Außenseite eine Verzahnung (31) aufweist, die im Eingriff mit der Verzahnung des letzten Kettenelements (3) ist, und mit einer damit schwenkbar verbundenen, in verschiedenen Winkelstellungen arretierbaren Rastlasche (13) versehen ist, die auf ihrer Außenseite eine Verzahnung (32) aufweist, die im Eingriff mit der Verzahnung des vorletzten Kettenelements (3) ist, und eine konzentrisch zur Gelenkachse (16) angeordnete Verzahnung (18) aufweist.

2. Gliederkette nach Anspruch 1, **dadurch gekennzeichnet, dass** das Stellglied derart mit den Kettenelementen (2, 3) im Eingriff ist, dass diese relativ zu einander verdreht werden.

3. Gliederkette nach Anspruch 2, **dadurch gekennzeichnet, dass** in die Rastlasche (13) in Raststellung eine drehbar an der Anschlusslasche (12) gelagerte Sperrklinke (14) eingreift, wobei die Sperrklinke (14) in der ausgerückten Position durch eine Feder (15) gehalten und in der eingerückten Position von derselben Feder (15) beaufschlagt wird, **dadurch gekennzeichnet, dass** lediglich ein Anschlagnocken (20) an der Rastlasche (13) zum Ausrücken der Sperrklinke (14) durch Zusammenwirken mit einer Ausrücknase (22) vorgesehen ist und dass die Sperrklinke (14) eine Einrückfläche (21) aufweist, die mit der Verzahnung (18) zum Einrücken zusammenwirkt.

4. Gliederkette nach Anspruch 3, **dadurch gekennzeichnet, dass** der aktive Bereich der eigentlichen Einrückfläche (21) an der der Verzahnung (18) zugewandten Seite der Ausrücknase (22) ausgebildet ist.

5. Gliederkette nach Anspruch 4 oder 5, **dadurch gekennzeichnet, dass** die Einrückfläche (21) exzentrisch zur Drehachse (17) der Sperrklinke (14) ausgebildet ist.

6. Gliederkette nach einem der vorhergehenden Ansprüche 3 bis 5, **dadurch gekennzeichnet, dass** die Einrückfläche (21) der Sperrklinke (14) einerseits von mindestens einem Rastzahn (19) und andererseits von der Ausrücknase (22) begrenzt wird.

7. Gliederkette nach einem der vorhergehenden Ansprüche 3 bis 6, **dadurch gekennzeichnet, dass** die Sperrklinke (14) an der der Verzahnung (18) abgewandten Seite eine Rastausnehmung (23) aufweist, in die die Feder (15) bei ausgerückter Stellung der Sperrklinke (14) eingreift und diese festhält.

8. Gliederkette nach einem der vorhergehenden Ansprüche 3 bis 7, **dadurch gekennzeichnet, dass** die Sperrklinke (14) an der der Verzahnung abgewandten Seite eine Anlagefläche (24) aufweist, an die die Feder (15) bei eingerückter Stellung der Sperrklinke (14) anliegt.

9. Gliederkette nach einem der vorhergehenden Ansprüche 3 bis 8, **dadurch gekennzeichnet, dass** die Drehachse (16) der Rastlasche (13), die Drehachse (17) der Sperrklinke (14) und die Längsmittellinien der beiden Laschen (12, 13) sowie die Drehachsen (4) der Kettenelemente in der Ausgangsposition (Fig. 7) auf einer Linie liegen.

10. Gliederkette nach einem der vorhergehenden Ansprüche, **dadurch gekennzeichnet, dass** die Drehachsen (4) eine Kunststoffscheibe (8) und eine Kunststoffbuchse (7) aufweisen.

11. Gliederkette nach einem der vorhergehenden Ansprüche, **dadurch gekennzeichnet, dass** die Kunststoffscheibe (8) bzw. -buchse (7) aus elastischem Kunststoff ausgeführt sind.

12. Gliederkette nach einem der vorhergehenden Anspruch, **dadurch gekennzeichnet, dass** das Stellglied eine elektromotorisch angetriebene Schnecke umfasst, die eine Verstellung des vorletzten Kettenelements (3) relativ zu dem fixierten letzten Kettenelement (2) bewirkt.

13. Gliederkette nach einem der vorhergehenden Ansprüche, **dadurch gekennzeichnet, dass** das Stellglied eine Selbsthemmung oder Rastfunktion aufweist.

14. Verwendung einer Gliederkette nach einem der vorhergehenden Ansprüche in einem Sessel, insbesondere einem Sitz-Liege-Sessel, oder einem Sofa oder dergleichen.

## Claims

1. Link chain (1) having two or more rows of chain elements (2, 3), the chain elements (2, 3) in one row being connected to those in the adjacent row to be rotatable in the plane of the chain, in such a way that each chain element (3) has two shafts for rotation (4), each of which is one of the two shafts for rotation (4) of two different chain elements (3) in adjacent rows, and in such a way that the chain elements (3) in one row are so connected together by sets of teeth (5) at their ends that the chain (1) is flexible in the plane of the chain, **characterised in that** the chain elements (3) at one end of the link chain are similarly provided with a set of teeth on their periphery, which set of teeth is in engagement with a positioner (11), the positioner having a pneumatic, hydraulic, electric motor or manual drive and the positioner being a latch-action fitting (11), the latch-action fitting (11) being provided with a connecting plate (12) which has on its periphery a set of teeth (31) which is in engagement with the set of teeth of the last chain element (3), and being provided with a latching plate (13) which is pivotably connected to the connecting plate (12), which is able to be locked in various angular positions, and which has on its periphery a set of teeth (32) which is in engagement with the set of teeth of the penultimate chain element (3), and the latch-action fitting (11) having a set of teeth (18) arranged concentrically with its axis of pivot (16).

2. Link chain according to claim 1, **characterised in that** the positioner is so engaged with the chain elements (2, 3) that the latter can be rotated relative to one another.

3. Link chain according to claim 2, **characterised in that** a locking pawl (14) rotatably mounted on the connecting plate (12) engages in the latching plate (13) in the latched position, the locking pawl (14) being held in the disengaged position by a spring (15) and being applied by the same spring (15) when in the engaged position, **characterised in that** there is merely a stop projection (20) provided on the latching plate (13) to disengage the locking pawl (14) by co-operating with a disengaging nose (22), and **in that** the locking pawl (14) has an engaging surface (21) which co-operates with the set of teeth (18) to cause engagement.

4. Link chain according to claim 3, **characterised in that** the active region of the engaging surface (21) proper is formed on that side of the disengaging nose (22) which is adjacent the set of teeth (18).

5. Link chain according to claim 4 or 5, **characterised in that** the engaging surface (21) is formed to be eccentric to the axis of rotation (17) of the locking pawl (14).

6. Link chain according to one of preceding claims 3 to 5, **characterised in that** the engaging surface (21) of the locking pawl (14) is bounded on the one hand by at least one latching tooth (19) and on the other hand by the disengaging nose (22).

7. Link chain according to one of preceding claims 3 to 6, **characterised in that** the locking pawl (14) has, on the side remote from the set of teeth (18), a latching recess (23), in which, when the latching pawl (14) is in the disengaged position, the spring (15) engages and retains the latching pawl (14).

8. Link chain according to one of preceding claims 3 to 7, **characterised in that** the locking pawl (14) has, on the side remote from the set of teeth, a supporting surface (24) against which the spring (15) bears when the locking pawl (14) is in the engaged position.

9. Link chain according to one of preceding claims 3 to 8, **characterised in that** the axis of rotation (16) of the latching plate (13), the axis of rotation (17) of the locking pawl (14) and the longitudinal centrelines of the two plates (12, 13), together with the axes of the shafts for rotation (4) of the chain elements are in a line in the starting position (Fig. 7).

10. Link chain according to one of the preceding claims, **characterised in that** the shafts for rotation (4) have a washer (8) of plastics material and a bush (7) of plastics material.

11. Link chain according to one of the preceding claims, **characterised in that** the washer (8) of plastic material and/or bush (7) of plastics material are made of elastic plastics material.

12. Link chain according to one of the preceding claims, **characterised in that** the positioner comprises a screw driven by electric motor means which causes an adjustment of the penultimate chain element (3) relative to the last chain element (2), which latter is fixed in position.

13. Link chain according to one of the preceding claims, **characterised in that** the positioner has a self-locking mechanism or a latching function.

14. Use of a link chain according to one of the preceding claims in a chair, and in particular in a fully reclining chair, or a sofa or the like.

## Revendications

1. Chaîne à maillons (1) comportant deux rangées ou plus d'éléments de chaîne (2, 3), les éléments de chaîne (2, 3) d'une rangée étant reliés de manière à pouvoir tourner à ceux de la rangée adjacente dans le plan de la chaîne de sorte que chaque élément de chaîne (3) possède deux axes de rotation (4) qui constituent chacun un des deux axes de rotation (4) de deux éléments de chaîne différents (3) de rangées adjacentes, et que les éléments de chaîne (3) d'une rangée sont reliés entre eux par des dentures (5) situées à leurs extrémités de sorte que la chaîne (1) est souple dans le plan de la chaîne, **caractérisée en ce que** les éléments de chaîne (3) sont également dotés à une extrémité de la chaîne à maillons sur leur côté extérieur d'une denture qui est en engrènement avec un actionneur (11), l'actionneur possédant un entraînement pneumatique, hydraulique, électromécanique ou manuel et l'actionneur étant une garniture à encliquetage (11), la garniture à encliquetage (11) étant dotée d'une patte de raccordement (12), qui comporte sur son côté extérieur une denture (31) qui est en engrènement avec la denture du dernier élément de chaîne (3), et d'une patte à encliquetage (13) qui est reliée à la patte de raccordement de façon à pouvoir pivoter, qui peut être bloquée dans différentes positions angulaires et qui comporte sur son côté extérieur une denture (32) qui est en engrènement avec la denture de l'avant-dernier élément de chaîne (3) et comporte une denture (18) disposée concentriquement à l'axe d'articulation (16).

2. Chaîne à maillons selon la revendication 1, **caractérisée en ce que** l'actionneur est engrènement avec les éléments de chaîne (2, 3) de sorte que ceux-ci sont tournés l'un par rapport à l'autre.

3. Chaîne à maillons selon la revendication 2, **caractérisée en ce qu'**un cliquet de blocage (14) monté sur la patte de raccordement (12) de façon à pouvoir tourner est en engrènement dans la patte à encliquetage (13) en position d'encliquetage, dans laquelle le cliquet de blocage (14) est maintenu dans la position de désaccouplement par un ressort (15) et est sollicité par le même ressort (15) dans la position d'accouplement, **caractérisée en ce qu'**il est prévu un seul ergot de butée (20) au niveau de la patte à encliquetage (13) pour désaccoupler le cliquet de blocage (14) par coopération avec un talon de désaccouplement (22) et **en ce que** le cliquet de blocage (14) présente une surface d'accouplement (21) qui coopère avec la denture (18) pour réaliser l'accouplement.

4. Chaîne à maillons selon la revendication 3, **caractérisée en ce que** la région active de la surface d'accouplement proprement dite (21) est conformée du côté du talon de désaccouplement (22) qui est dirigé vers la denture (18).

5. Chaîne à maillons selon la revendication 4 ou 5, **caractérisée en ce que** la surface d'accouplement (21) est conformée excentriquement par rapport à l'axe de rotation (17) du cliquet de blocage (14).

6. Chaîne à maillons selon l'une des revendications précédentes 3 à 5, **caractérisée en ce que** la surface d'accouplement (21) du cliquet de blocage (14) est délimitée d'une part par au moins une dent d'encliquetage (19) et d'autre part par le talon de désaccouplement (22).

7. Chaîne à maillons selon l'une des revendications précédentes 3 à 6, **caractérisée en ce que** le cliquet de blocage (14) comporte du côté opposé à la denture (18) un évidement d'encliquetage (23) dans lequel le ressort (15) s'engage lorsque le cliquet de blocage (14) est en position de désaccouplement et immobilise celui-ci.

8. Chaîne à maillons selon l'une des revendications précédentes 3 à 7, **caractérisée en ce que** le cliquet de blocage (14) présente du côté opposé à la denture une surface d'appui (24) contre laquelle le ressort (15) appuie lorsque le cliquet de blocage (14) est en position d'accouplement.

9. Chaîne à maillons selon l'une des revendications précédentes 3 à 8, **caractérisée en ce que** l'axe de rotation (16) de la patte à encliquetage (13), l'axe de rotation (17) du cliquet de blocage (14) et les axes médians longitudinaux des deux pattes (12, 13) ainsi que les axes de rotation (4) des éléments de chaîne se trouvent sur une ligne dans la position de départ (Figure 7).

10. Chaîne à maillons selon l'une des revendications précédentes, **caractérisée en ce que** les axes de rotation (4) comportent une rondelle de matière synthétique (8) et une douille de matière synthétique (7).

11. Chaîne à maillons selon l'une des revendications précédentes, **caractérisée en ce que** la rondelle de matière synthétique (8) ou la douille de matière synthétique (7) sont réalisées à partir d'une matière synthétique élastique.

12. Chaîne à maillons selon l'une des revendications précédentes, **caractérisée en ce que** l'actionneur comporte une vis sans fin qui est entraînée par un moteur électrique et qui provoque un déplacement de l'avant-dernier élément de chaîne (3) par rapport au dernier élément de chaîne fixé (2).

13. Chaîne à maillons selon l'une des revendications précédentes, **caractérisée en ce que** l'actionneur comporte un blocage automatique ou une fonction d'encliquetage.

14. Utilisation d'une chaîne à maillons selon l'une des revendications précédentes dans un fauteuil, notamment un fauteuil-couchette ou un canapé ou analogue.
